# EUROPEAN PATENT SPECIFICATION

(11) **EP 3 543 677 B1**
(45) Date of publication and mention of the grant of the patent: **07.12.2022**
(21) Application number: 19164065.5
(22) Date of filing: 20.03.2019
(51) Int. Cl.: G01N 3/04

(54) **A CLAMPING ELEMENT FOR CLAMPING A TEST PIECE FOR A MACHINE FOR THE MECHANICAL CHARACTERISATION OF A MATERIAL**
EINSPANNELEMENT ZUM EINSPANNEN EINER PROBE FÜR EINE MASCHINE ZUR MECHANISCHEN PRÜFUNG EINES MATERIALS
ELEMENT D'ETEAU POUR UNE MACHINE DE CHARACTERISATION MECHANIQUE D'UN MATERIAL

(30) Priority: 21.03.2018 IT 201800003851
(43) Date of publication of application: 25.09.2019
(73) Proprietor: MaCh3D srl, 43123 Parma (PR) (IT)
(72) Inventor: VETTORI, Matteo, 43123 PARMA (IT); BERGONZI, Lorenzo, 26100 CREMONA (IT)
(74) Representative: Paparo, Aldo

(56) References cited:
- WO-A1-2013/004812
- CN-U- 203 164 050
- DE-A1- 10 242 706
- FR-A1- 2 859 532
- US-A- 2 141 284
- US-A1- 2015 323 432

## Description

The present invention relates to a clamping element for a test piece for the mechanical characterisation of a material. In particular, the mechanical characterisation of the materials comprises a plurality of tests that make it possible to learn the mechanical properties of a material under investigation in order to determine the effectiveness of its use in different applicative solutions.

In light of this, the invention falls within the large technical sector of engineering and, in particular, in the certification of the quality and performance of materials.

During the characterisation procedure, a test piece modelled according to predetermined rules is subjected to the application of different types of external loads. Depending on the type of test, the test piece may be subjected to tensile, compression or flexion loads, shearing or a combination thereof. Such loads can be constant or variable from both a perspective of entity and a perspective considering the application duration. In particular, the value of the applied load can vary cyclically between a maximum and a minimum or remain constant over time.

Some test campaigns involve the application of high load levels applied to a low number of cycles in order to determine the low-cycle fatigue behaviour of the material. Another type of test campaign requires the application of low load levels applied to a very high number of cycles (which often does not culminate with the breakage of the test piece) in order to determine the fatigue behaviour of the material. One type of particularly significant test in the characterisation of the mechanical properties of a material is the one used to determine the tensile strength of the test piece. In this case the load is applied in a consistent manner until test piece yield.

Different types of machinery that can be used for the characterisation of materials are commercially available, for example the document FR2859532A1 refers to a traction machine configured for testing the mechanical properties of animal femurs; the most common are universal testing machines (UTMS) that are designed to test the test pieces in a tensile, compression or bending or shearing manner. Such machines are configured to apply a given load spectrum in order to determine the material's response to the application of external stresses.

During the test the machinery must also be able to accurately measure the forces, movements and deformations to which the test piece is subject. Very frequently strain gages or extensometers are connected to the test pieces in order to obtain more accurate measurements of the deformations that occur during the load application step.

Test pieces with an elongated shape are used for the characterisation of the tensile behaviour and, in agreement with the Von Mises yield criterion theory, the forces are evaluated at distant points from the two ends of the test piece so as to limit the influence due to edge effects.

During these types of tests, the test piece is clamped at its two ends by two arms of the test machinery arranged opposite to each other. These arms move away from each other, generating a condition of axial traction on the test piece.

Special gripping systems are used in order to ensure an adequate transfer of the loads from the test machine to the test piece.

The use of reliable gripping systems is essential for obtaining meaningful results for the purposes of measurement: in the case of cylindrical or flat test pieces, jaws with wedge-shaped ends can usually be used, while filaments or other particular geometries may require the use of different attachments. Jaws with screws are among the most common gripping systems. Such systems are particularly cheap and available in a wide variety of load capacities up to 4500N. Jaws with screws are generally used for tests on flat test pieces and require the expertise of a skilled operator, as excessive pressure exerted by the gripping members during the characterisation step can lead to the yield of the test piece and affect the validity of the test. Another type of gripping system is wedge-shaped jaws. Such systems are self-gripping and available with load capacities over 450kN. Some models can be gripped without altering the vertical position of the gripping faces, in order to more precisely define the point at which the test piece will begin to be loaded. Their use is particularly advantageous with test pieces that are difficult to grip in another way. Moreover, these systems avoid excessive compressive forces that could cause the test piece to break in the jaws. Disadvantageously such jaws hardly ensure a perfect axial alignment of the test piece with the direction of the applied load, a particularly important requirement for the accurate characterisation of the material.

In fact, regardless of the type of jaw used, a fundamental requirement for the proper performance of the test is the alignment of the test piece with the machinery that applies the load. Generally, this operation is entrusted to the sensitivity of a qualified operator.

Disadvantageously, delegating this operation to the judgement of an operator can lead to inconsistencies in the tests performed, as well as real measurement errors.

Very disadvantageously in the systems of the prior art, there is a lack of automatic alignment systems of the test piece in relation to the gripping jaws. This makes complicated positioning operations necessary in a start-up step of the test to align the axis of the test piece with that of the machine's load. An incorrect alignment can, in fact, generate preferential load paths and invalidate the results of the entire test.

In addition, the clamping operation to ensure the correct gripping of the test piece exposes the operator to risks related to the possibility of being crushed in the gripping jaws.

Moreover, test pieces frequently break inside the jaws due to an overly high clamping force.

In light of this the operation must be performed by a qualified operator, which involves an increase in costs and a slowdown in the test execution step.

The aim of the present invention is therefore to provide a clamping element for clamping a test piece for the mechanical characterisation of a material which is capable of ensuring an accurate alignment of the test piece without requiring laborious positioning operations to align the test piece with the loading axis of the machinery in the test start-up step.

The defined technical task and the specified aims are substantially achieved by a clamping element for clamping a test piece for a machine for the mechanical characterisation of a material comprising the characteristics set out in one or more of the claims. The dependent claims correspond to possible embodiments of the invention.

Further characteristics and advantages of the present invention will become more apparent from the indicative and thus non-limiting description of an embodiment of a clamping element for clamping a test piece for the mechanical characterisation of a material.

This description will be set out below with reference to the attached drawings, which are provided solely for indicative and therefore non-limiting purposes, in which:
- figure 1 is a plan view of a test piece for a machine for the mechanical characterisation of a material according to the present invention;
- figure 2 is a perspective view of a clamping element for clamping a test piece for a machine for the mechanical characterisation of a material according to the present invention;
- figure 3a is a schematic view of a clamping device for clamping a test piece for a machine for the mechanical characterisation of a material according to the present invention in a setting configuration;
- figure 3b is a schematic view of a clamping device for clamping a test piece for a machine for the mechanical characterisation in a first configuration of use with aligned clamping elements;
- figure 3c is a schematic view of a clamping device for clamping a test piece for a machine for the mechanical characterisation of a material in a second configuration of use with misaligned clamping elements;
- figures 4-8 are perspective views of possible embodiments of a portion of a test piece according to the present invention.

With reference to the appended drawings, a test piece for the mechanical characterisation of a material has been generally indicated with "P", hereinafter referred to as test piece "P". Such test piece "P", as will be described below, has the peculiarity of being created in such a way as to optimise its use in a machine for the mechanical characterisation of a material, in particular (but not limited to) a machine for tensile tests.

The test piece "P" has an elongated conformation in a prevalent extension direction. Such test piece "P" has a central portion "C" at the ends of which respective heads "T" are arranged, opposite each other and configured to allow anchorage to a machine for mechanical characterisation.

Since this test piece is preferably used in characterisation tests of the material's tensile behaviour, the correct execution of the test requires that the central portion "C" of the test piece "P" is deformed under the action of the axial tensile load applied to the heads of the test piece by the test machine. Depending on the type of test carried out on the test piece "P", it can be brought to yield. In this case, the breakage of the test piece must occur in the central portion "C" of the test piece "P" so that the results are useful for the characterisation.

The two heads "T" of the test piece "P" have a greater transverse dimension with respect to a central portion of the test piece itself and are suitably connected to minimise the concentration of stresses that would affect the breakage predictability in the central portion of the test piece "P" .

The test piece P has an axis of symmetry along an axis X-X coinciding with the prevalent extension direction of the test piece itself.

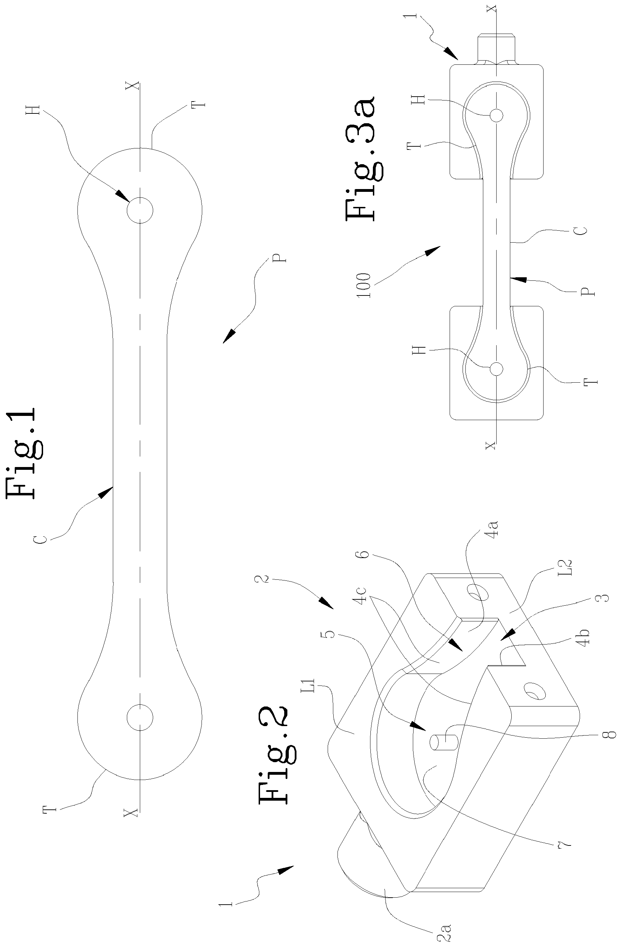

Figures 1-3 refer to a first embodiment of the test piece "P".

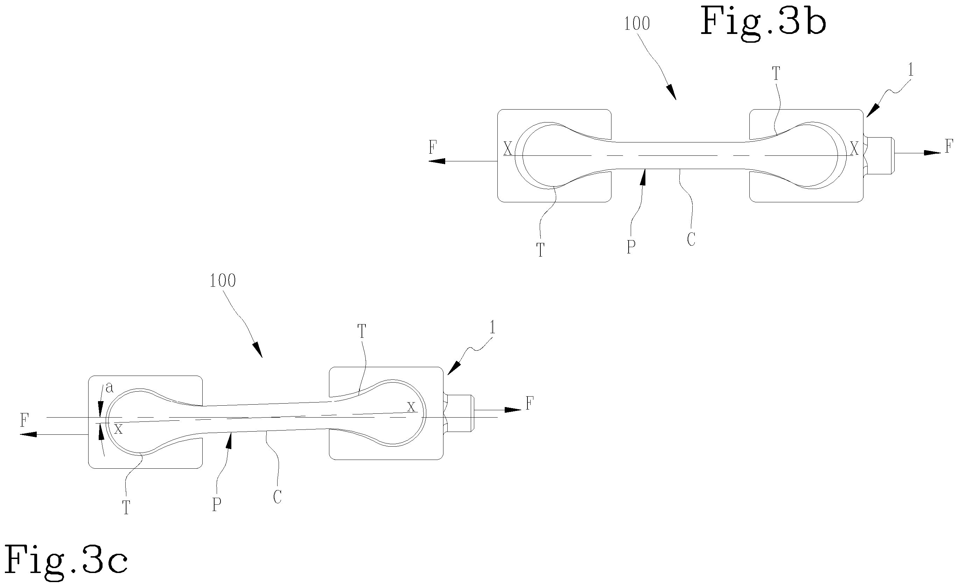

As shown in figures 1 and 3, the heads "T" have a particular curved conformation adapted to facilitate the positioning operations of the test piece "P" in a special seat connected to the machine for the mechanical characterisation. Advantageously such a conformation is configured to facilitate the alignment of the test piece with respect to the direction of application of the loads.

Preferably, in this embodiment the heads "T" of the test piece "P" have a typical drop or bulb shape. In other words, starting from one end of the central portion "C" of the test piece "P" there is an increase in the cross-section (width), therefore divergent, defining respective opposite concavities opening into a curved ending, preferably an ellipse or arc of a circle, defining the end portion of the head "T".

The test piece "P" has a cavity "H" fashioned at a predetermined portion of each head "T". Such cavity "H", for example shaped like a cylindrical through hole, is configured to receive a pin of a clamping element of the machine for the mechanical characterisation of a material in order to make performing the procedure safer.

The test piece "P" can be created by means of waterjet cutting of a sheet of a material to be characterised, for example steel or composite material. According to different embodiments, the test piece "P" can be obtained through different production technologies, for example laser cutting or cutting with blades, melting, additive printing, injection moulding and others, and be made with different types of material without altering the inventive concept of the present invention.

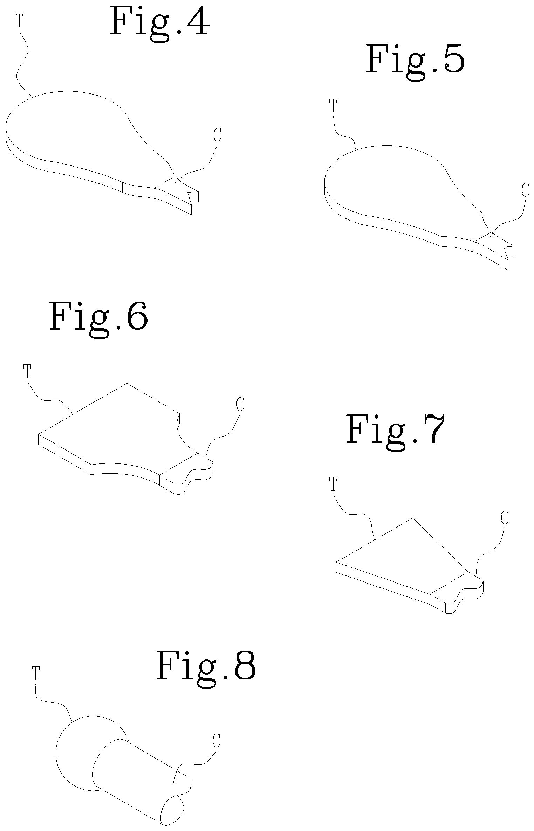

Further embodiments of the test piece "P" are shown in figures 4-8. In particular figure 4 shows a particular embodiment wherein starting from one end of the central portion "C" of the test piece "P", there is an increase in the cross-section (width) defining two pairs of concavities respectively arranged opposite to each other and opening in a curved ending defining the end portion of the head "T". In particular two opposing convexities connect the two concavities of each.

Figure 5 shows an embodiment wherein two opposing concavities define an increase in the cross-section of the test piece "P" starting from one end of the central portion "C" of the test piece "P" and wherein such opposing concavities open in a curved ending that defines the end portion of the head "T".

A further embodiment is shown in figure 6, wherein a progressive increase in the cross-section of the test piece "P" is shown from the central portion "C", defined by two respective opposing concavities opening into an ending with a substantially rectangular shape and defining the head "T".

Figure 7 shows a particular embodiment of the test piece "P" wherein starting from one end of the central portion "C" of the test piece "P" there is a gradual increase in the cross-section (width) of the test piece "P" defining an ending with a substantially trapezoidal shape and defining the head "T". Figure 8 shows a particular configuration wherein the central portion "C" of the test piece "P" has a substantially stem-like conformation with a constant diameter and the head "T", connected to it, has a spherical conformation with a greater diameter than the aforementioned stem.

According to a further aspect, the present invention relates to a clamping element of a test piece for the mechanical characterisation of a material hereinafter referred to as clamping element 1.

Preferably, the clamping element 1 is configured for clamping a test piece "P" according to one or more of the aforementioned characteristics.

The clamping element 1 comprises a body 2 configured to be connected to a portion of a machine for the mechanical characterisation of a material. As can be seen in figure 2, the body 2 has connection means 2a configured to allow the connection of the element 1 to a machine for the mechanical characterisation of a material. Preferably these connection means are of the male-female type or screw-nut screw type.

According to a preferred embodiment of the present invention, the body 2 is made of a material with high tenacity and stiffness, for example steel, so as to maintain a nearly non-deformed conformation under the application of loads during the different types of tests for the characterisation. Preferably, the body 2 is made in one piece by means of a steel milling process.

According to further embodiments, the body 2 is made by means of different production technologies without altering the inventive concept of the present invention.

The body 2 has a passage channel 3 configured to receive a central portion of the test piece "P".

The passage channel 3 is delimited by at least two opposing lateral walls 4a, 4b. In this way the passage channel 3 is open at least on a first side L1 of the body 2 and on a second side L2 of the body 2, transverse to the first. According to a preferred embodiment of the present invention, the passage channel opens into a housing 5 of the body 2, adapted to receive the head of the test piece "P" in transverse insertion through an opening 6 of the housing 5 itself arranged on the first side L1 of the body 2. In particular, the housing is delimited by the lateral walls 4a, 4b which act as abutment walls 4c to prevent the passage of the head of the test piece through the passage channel 3. The housing 5 is also substantially counter-shaped to the head of the test piece "P", in particular at the aforementioned cavity "H" and/or the outer profile of the head "T".

In other words, as shown in figure 2, the body 2 has a plate-like structure with a seat afforded on one of its main surfaces (for example through milling or other machining) having a shape, in plan view on a plane parallel to the lying plane of the body 2, substantially counter-shaped to the head "T" of a test piece "P".

The passage channel 3 has a smaller transverse dimension than the abutment dimension of the head of the test piece and, in this way, prevents its sliding by means of undercut coupling of the head "T" of the test piece "P" in the housing 5. In other words, according to the invention the clamping element 1 defines a retention of the head "T" of the test piece "P" in the housing 5 by means of geometrical locking rather than by friction systems as in the prior art.

Preferably each head T is coupled within a respective housing 5 through coupling with clearance.

The lateral walls 4a, 4b diverge from each other at one end of the passage channel 3 away from the central portion "C" of the test piece "P", so as to form abutment walls 4c arranged in fixed positions with respect to the passage channel 3 to prevent the sliding of the head through the passage channel 3.

Said abutment walls 4c define abutment seats for the opposing concavities of the test piece P. The aforementioned abutment walls 4c can be affected by all the respective opposing concavities of the test piece P in the case wherein the clamping devices 100 are aligned with each other, i.e. when the clamping devices are moved, towards or away from each other, along a direction F-F coinciding with the axis of symmetry X-X of the test piece P. In the case where there is misalignment between the clamping devices, namely when the direction F-F intersects the axis of symmetry X-X of the test piece P by defining an angle "a" other than 0°, then at least one of said opposing concavities abuts against a respective abutment wall 4c.

In the circumstance described above and schematically shown in figure 3b, the coupling with clearance between the head T and the housing allows possible inclinations of the test piece P during the procedures for the characterisation of the material and facilitates the support of at least one of the two opposing concavities of the heads T on a respective abutment wall 4c in order to avoid subjecting the test piece P to flexural stresses caused by the incorrect alignment between the clamping devices 100.

In other words, the coupling with clearance between the heads "T" of the test piece "P" and the seats of the housing 5 allow the test piece to orient itself according to the load direction. In this way the system, and in particular the test piece, is able to compensate possible positioning misalignments with respect to the load line. This makes it possible to avoid generating flexural stresses in the useful section of the test piece P caused by an incorrect alignment.

As can be seen in the attached figures, the opening 6 has an arched portion configured to allow a firm clamping of the test piece within the housing 5 during the execution of the material characterisation procedures. According to further embodiments not shown in the attached figures, the housing 5 and/or the opening 6 can have different conformations, in particular they are preferably counter-shaped to the shape of the heads "T" shown in figures 4-8.

Advantageously the housing 5 facilitates the connection operations of the test piece to the machine for the characterisation and guarantees the correct alignment of the test piece with respect to the applied load, even in the case of a slight misalignment of the clamping elements 1.

Preferably, the housing and the passage channel have a bottom wall 7 opposite the opening 6. Such bottom wall defines an abutment surface configured to supportingly receive and limit the problems caused by possible positioning errors of the test piece "P". As can be seen in the appended figures, the bottom wall 7 is formed integrally with the body 2 of the clamping element 1.

In other words, the aforementioned seat fashioned on the body 2 is not a pass-through joining the two major surfaces of the body 2 but extends only to a depth less than the thickness of the body 2 so as to create said bottom wall 7.

Advantageously this embodiment makes it possible to obtain a clamping element 1 with high structural integrity.

According to a preferred embodiment of the present invention and as can be seen in the attached figures, the housing can have a pin 8 extending from the bottom wall 7. Such pin 8 is adapted to be inserted into the cavity "H" fashioned in the head "T" of the test piece "P".

Advantageously, this pin 8 facilitates the locking of the test piece "P" in the housing 5 during the material characterisation procedures.

Other embodiments can also omit the presence of the pin 8 without altering the inventive concept of the present invention, thereby delegating the retention of the head "T" in the housing 5 to the outer shape of the head "T" itself.

The housing 5 can be operatively connected to an upper closure element (not present in the attached figures), in particular an upper closure plate of the housing 5, configured to reduce the risk of an accidental disengagement of the test piece in a condition of use.

According to a further aspect, the present invention relates to a clamping device 100 of a test piece for a machine for the mechanical characterisation of a material comprising two clamping elements 1 of the type described above and between them arranged in a mutually counter-faced position to receive the respective opposing heads "T" of the same test piece "P" to subject to mechanical testing.

In use each of the two heads "T" of a test piece "P" is arranged inside the housing 5 of the clamping element 1. In this step, the central portion "C" of the test piece "P" is inserted inside the passage channel 3 according to a direction transverse to the prevalent extension direction of the test piece "P" so that each head "T" abuts against the abutment walls 4c.

The two clamping elements 1 are connected to two arms or jacks of a machine for the mechanical characterisation of a material, in particular a machine for mechanical tensile tests. During the characterisation step the two arms are moved toward or away along a direction F-F, generating a load spectrum on the test piece. The deformations to which the test piece is subjected are recorded by means of suitable acquisition means, for example strain gauges or extensometers, and evaluated by means of suitable processing means (not shown in the attached figures). When the test comes to an end the two arms are brought back to the initial distance so as to allow the removal of the test piece.

Generally, the characterisation procedure requires the execution of the tests on a plurality of test pieces in order to have a multitude of experimental data on which to mediate the results to obtain descriptive values of the mechanical characteristics of the material.

Advantageously, the conformation of the elements 1 allows easy insertion and replacement of the test piece in the test machine.

The present invention also comprises a system for the mechanical characterisation of a material comprising the above-mentioned clamping device 100 and a plurality of test pieces "P". Each test piece "P" has an elongated conformation according to a prevalent extension direction with heads "T" enlarged transversally with respect to a central portion of the test piece at an abutment dimension of the heads.

Preferably, the system for the mechanical characterisation of a material comprises a plurality of test pieces "P" according to the aforementioned description.

According to a further aspect, the present invention relates to a clamping kit for clamping a test piece for a machine for the mechanical characterisation of a material comprising a plurality of clamping elements according to one or more of the aforementioned characteristics having different housings of different geometries, each of which is adapted to receive in insertion a head "T" of a test piece "P" of a plurality of test pieces "P" having heads "T" with different geometries.

Note therefore that the present invention achieves the proposed aims thanks to a clamping element that makes it possible to avoid lengthy and uncertain alignment procedures of the test piece, making the material characterisation tests particularly more accurate and faster thanks to the presence of specific housings for the heads of the test piece that allow the locking of the test piece by means of geometrical coupling.

Furthermore, the particular conformation of the clamping element protects the operator assigned to fix the test piece from the risk of accidents due to crushing of the fingers in the clamping jaws.

Advantageously, in fact, the clamping of the test piece inside the housing is intuitive and does not require the intervention of a specialised operator. Advantageously, the conformation of the test piece and the clamping elements makes it possible to reduce the breakage of the test pieces near the heads.

## Claims

1. A system for the mechanical characterisation of a material comprising:
- a plurality of test pieces (P), each test piece (P) having an elongated conformation according to a prevalent extension direction with heads (T) enlarging transversally with respect to a central portion (C) of said test piece at an abutment dimension of said heads (T);
- a clamping device (100) comprising two clamping elements (1), each clamping element (1) comprising a body (2) configured to be connected to a portion of a machine for the mechanical characterisation of a material, said body (2) defining a housing (5) and having a passage channel (3) delimited by at least two opposing lateral walls (4a, 4b) so that said passage channel (3) is open at least on a first side (L1) of said body (2) and on a second side (L2) of said body (2), transverse to the first, wherein said passage channel (3) is adapted to receive the central portion (C) of a test piece (P) and has a smaller transverse dimension than the abutment dimension of the head (T) of the test piece (P), wherein said lateral walls (4a, 4b) are enlarged at an end of the passage channel (3) to form abutment walls (4c) arranged in fixed positions with respect to said passage channel (3) to prevent the passage of said head (T) through the passage channel (3) during a tensile characterization of the test piece (P);
wherein the heads (T) of the test piece (P) have, starting from one end of the central portion (C) of the test piece (P), an increase in the cross-section (width), therefore divergent, defining respective opposite concavities opening into an ending defining the end portion of the heads (T), and wherein the lateral walls (4a, 4b) diverge between them at one end of the passage channel (3), away from the central portion (C) of the test piece (P), so as to form the abutment walls (4c) arranged in fixed positions with respect to the passage channel (3) which prevent the sliding of the head of the test piece through the passage channel (3) during the tensile characterization of the test piece (P); at least one of said opposing concavities abutting, in the event of misalignment of the clamping elements (1) during the mechanical characterisation step, on a respective abutment wall (4c);
**characterized in that** said housing (5) is counter-shaped to said head (T) of the test piece (P) and said test piece (P) has an axis of symmetry (X-X) along the prevalent extension direction, said housing (5) being delimited by the lateral walls (4a, 4b) wherein said passage channel (3) opens into the housing (5), said housing (5) being adapted to receive said head (T) in transverse insertion through an opening (6) of the housing (5) arranged on the first side (L1) of said body (2), said body (1) having an end wall delimiting a portion of the housing (5) opposite to the passage channel (3); and **in that** said clamping elements (1), during the characterisation step, can be moved along a direction (F-F) nearer or farther; said head (T) being coupled within the housing (5) with clearance to allow, wherever the direction (F-F) does not coincide with the axis of symmetry (X-X), possible inclinations of the test piece (P) during the procedures for the characterisation of the material and favour the support of at least one of the opposing concavities of the heads (T) on a respective abutment wall (4c) so as to avoid flexural stresses to the test piece (P) due to an incorrect alignment between the clamping elements (1).

2. The system for the mechanical characterisation of a material according to claim 1, wherein the body (2) has a plate-like structure with a seat afforded on one of its main surfaces, the seat defining said housing (5).

3. The system for the mechanical characterisation of a material according to claim 1 or 2, wherein said opening (6) has at least one arched stretch or has a rectangular or trapezoidal conformation.

4. The system for the mechanical characterisation of a material according to any of the preceding claims, wherein said housing (5) and said passage channel (3) have a bottom wall (7), opposite said opening (6).

5. The system for the mechanical characterisation of a material according to claim 4, wherein said housing (5) has a pin (8) extending from said bottom wall (7) and adapted to be inserted in a cavity (H) of said test piece (P), preferably fashioned at a head (T).

6. The system for the mechanical characterisation of a material according to one or more of the preceding claims, wherein said body (2) is made of high tenacity material, preferably steel.

7. The system for the mechanical characterisation of a material according to claim 1, wherein said test piece (P) has a cavity (H), preferably fashioned at a head (T), said cavity (H) being adapted to receive a pin (8) of a clamping element (1) of the machine for the mechanical characterisation of a material.

8. The system for the mechanical characterisation of a material according to claim 1, wherein said test piece has an elongated conformation according to a prevalent extension direction with heads (T) enlarged transversally with respect to a central portion (C) of said test piece (P) at an abutment dimension of said heads (T), wherein said head (T) has an arched conformation, preferably spherical, or trapezoidal.

9. The system for the mechanical characterisation of a material according to claim 1, wherein each clamping device (1) has an opening (6) with an arched stretch configured to allow firm clamping of the test piece within the housing (5) during the execution of the procedures for the characterisation of the material and a bottom wall (7) opposite the opening (6), defining an abutment surface configured to supportingly receive and limit the problems caused by possible positioning errors of the test piece (P).

10. The system for the mechanical characterisation of a material according to claim 1, wherein each clamping element (1) defines a retention of the head (T) of the test piece (P) in the housing (5) by means of geometrical locking;.

11. A method for clamping a test piece in a machine for the mechanical characterisation of a material comprising
arranging a clamping element (1) according to one or more of claims 1 to 6;
arranging a test piece (P) having an elongated conformation according to a prevalent extension direction with heads (T) enlarged transversally with respect to a central portion (C) of said test piece (P) at an abutment dimension of said heads (T),
inserting said central portion (C) of said test piece (P) inside the passage channel (3) along a direction transverse to said prevalent extension direction so that each head (T) abuts against at least one of said abutment walls (4c).

## Patentansprüche

1. System zur mechanischen Charakterisierung eines Materials, umfassend:
- eine Vielzahl von Prüflingen (P), wobei ein jeder Prüfling (P) eine längliche Gestalt gemäß einer vorherrschenden Ausdehnungsrichtung mit Köpfen (T) aufweist, die in Bezug auf einen zentralen Abschnitt (C) des Prüflings bei einer Anschlagsabmessung der Köpfe (T) quer vergrößert sind;
- eine Einspannvorrichtung (100), die zwei Einspannelemente (1) umfasst, wobei ein jedes Einspannelement (1) einen Körper (2) umfasst, der ausgelegt ist, um mit einem Abschnitt einer Maschine zur mechanischen Charakterisierung eines Materials verbunden zu werden, wobei der Körper (2) ein Gehäuse (5) definiert und einen Durchgangskanal (3) aufweist, der durch mindestens zwei gegenüberliegende Seitenwände (4a, 4b) begrenzt wird, so dass der Durchgangskanal (3) mindestens auf einer ersten Seite (L1) des Körpers (2) und auf einer zweiten Seite (L2) des Körpers (2), quer zu dem ersten offen ist, wobei der Durchgangskanal (3) angepasst ist, um den zentralen Abschnitt (C) eines Prüflings (P) aufzunehmen, und eine kleinere Querabmessung als die Anschlagabmessung des Kopfes (T) des Prüflings (P) aufweist, wobei die Seitenwände (4a, 4b) an einem Ende des Durchgangskanals (3) vergrößert sind, um Anschlagwände (4c) zu bilden, die in festen Positionen in Bezug auf den Durchgangskanal (3) angeordnet sind, um den Durchgang des Kopfes (T) durch den Durchgangskanal (3) während einer Zugcharakterisierung des Prüflings (P) zu verhindern;
wobei die Köpfe (T) des Prüflings (P) ausgehend von einem Ende des zentralen Abschnitts (C) des Prüflings (P) eine Zunahme des Querschnitts (der Breite), daher divergent, aufweisen, wobei jeweilige gegenüberliegende Konkavitäten definiert werden, die in ein Ende münden, das den Endabschnitt der Köpfe (T) definiert, und wobei die Seitenwände (4a, 4b) zwischen ihnen an einem Ende des Durchgangskanals (3) von dem zentralen Abschnitt (C) des Prüflings (P) wegführend divergieren, um die Anschlagwände (4c) zu bilden, die in festen Positionen in Bezug auf den Durchgangskanal (3) angeordnet sind, die das Gleiten des Kopfes des Prüflings durch den Durchgangskanal (3) während der Zugcharakterisierung des Prüflings (P) verhindern; wobei mindestens eine der gegenüberliegenden Konkavitäten im Falle einer Fehlausrichtung der Einspannelemente (1) während des mechanischen Charakterisierungsschritts an einer jeweiligen Anschlagwand (4c) anliegt; **dadurch gekennzeichnet, dass** das Gehäuse (5) zum Kopf (T) des Prüflings (P) gegengeformt ist und der Prüfling (P) eine Symmetrieachse (X-X) entlang der vorherrschenden Ausdehnungsrichtung aufweist, wobei das Gehäuse (5) durch die Seitenwände (4a, 4b) begrenzt ist, wobei der Durchgangskanal (3) in das Gehäuse (5) mündet, wobei das Gehäuse (5) angepasst ist, um den Kopf (T) in Quereinführung durch eine Öffnung (6) des Gehäuses (5) aufzunehmen, die auf der ersten Seite (L1) des Körpers (2) angeordnet ist, wobei der Körper (1) eine Endwand aufweist, die einen Abschnitt des Gehäuses (5) gegenüber dem Durchgangskanal (3) begrenzt; und dadurch, dass die Einspannelemente (1) während des Charakterisierungsschritts entlang einer Richtung (F-F) näher oder weiter hin/wegführend bewegt werden können; wobei der Kopf (T) innerhalb des Gehäuses (5) mit Spiel gekoppelt ist, um überall dort, wo die Richtung (F-F) nicht mit der Symmetrieachse (X-X) zusammenfällt, mögliche Neigungen des Prüflings (P) während der Vorgänge zur Charakterisierung des Materials zu ermöglichen und die Abstützung von mindestens einer der gegenüberliegenden Konkavitäten der Köpfe (T) an einer jeweiligen Anschlagwand (4c) zu begünstigen, um Biegespannungen auf den Prüfling (P) aufgrund einer Fehlausrichtung zwischen den Einspannelementen (1) zu vermeiden.

2. System zur mechanischen Charakterisierung eines Materials nach Anspruch 1, wobei der Körper (2) eine plattenartige Struktur mit einem Sitz aufweist, der auf einer seiner Hauptoberflächen vorgesehen ist, wobei der Sitz das Gehäuse (5) definiert.

3. System zur mechanischen Charakterisierung eines Materials nach Anspruch 1 oder 2, wobei die Öffnung (6) mindestens ein gewölbtes Teilstück oder eine rechteckige oder trapezförmige Gestalt aufweist.

4. System zur mechanischen Charakterisierung eines Materials nach einem der vorhergehenden Ansprüche, wobei das Gehäuse (5) und der Durchgangskanal (3) eine Bodenwand (7) gegenüber der Öffnung (6) aufweisen.

5. System zur mechanischen Charakterisierung eines Materials nach Anspruch 4, wobei das Gehäuse (5) einen Stift (8) aufweist, der sich von der Bodenwand (7) aus erstreckt und angepasst ist, um in einen Hohlraum (H) des Prüflings (P) eingesetzt zu werden, der vorzugsweise an einem Kopf (T) ausgebildet ist.

6. System zur mechanischen Charakterisierung eines Materials nach einem oder mehreren der vorhergehenden Ansprüche, wobei der Körper (2) aus hochfestem Material, vorzugsweise Stahl, hergestellt ist.

7. System zur mechanischen Charakterisierung eines Materials nach Anspruch 1, wobei der Prüfling (P) einen Hohlraum (H) aufweist, der vorzugsweise an einem Kopf (T) ausgebildet ist, wobei der Hohlraum (H) zur Aufnahme eines Stifts (8) eines Einspannelements (1) der Maschine zur mechanischen Charakterisierung eines Materials ausgebildet ist.

8. System zur mechanischen Charakterisierung eines Materials nach Anspruch 1, wobei der Prüfling eine längliche Gestalt gemäß einer vorherrschenden Ausdehnungsrichtung mit Köpfen (T) aufweist, die in Bezug auf einen zentralen Abschnitt (C) des Prüflings (P) bei einer Anschlagsabmessung der Köpfe (T) quer vergrößert sind, wobei der Kopf (T) eine gewölbte Gestalt, vorzugsweise kugelförmig oder trapezförmig, aufweist.

9. System zur mechanischen Charakterisierung eines Materials nach Anspruch 1, wobei eine jede Einspannvorrichtung (1) eine Öffnung (6) mit einem gewölbten Teilstück, die so ausgelegt ist, dass sie ein festes Einspannen des Prüflings innerhalb des Gehäuses (5) während der Ausführung der Vorgänge zur Charakterisierung des Materials ermöglicht, und eine Bodenwand (7) gegenüber der Öffnung (6) aufweist, die eine Anschlagfläche definiert, die so ausgelegt ist, dass sie die Probleme, die durch mögliche Positionierungsfehler des Prüflings (P) verursacht werden, stützend aufnimmt und begrenzt.

10. System zur mechanischen Charakterisierung eines Materials nach Anspruch 1, wobei ein jedes Einspannelement (1) ein Zurückhalten des Kopfes (T) des Prüflings (P) im Gehäuse (5) mittels geometrischer Verriegelung definiert.

11. Verfahren zum Einspannen eines Prüflings in einer Maschine zur mechanischen Charakterisierung eines Materials, umfassend:
Anordnen eines Einspannelements (1) nach einem oder mehreren der Ansprüche 1 bis 6;
Anordnen eines Prüflings (P) aufweisend eine längliche Gestalt gemäß einer vorherrschenden Ausdehnungsrichtung mit Köpfen (T), die quer in Bezug auf einen zentralen Abschnitt (C) des Prüflings (P) bei einer Anschlagabmessung der Köpfe (T) vergrößert sind,
Einführen des zentralen Abschnitts (C) des Prüflings (P) in den Durchgangskanal (3) entlang einer Richtung quer zu der vorherrschenden Ausdehnungsrichtung, so dass ein jeder Kopf (T) an mindestens einer der Anschlagwände (4c) anliegt.

## Revendications

1. Système de caractérisation mécanique d'un matériau, comprenant :
- une pluralité d'éprouvettes (P), chaque éprouvette (P) ayant une conformation allongée selon une direction d'extension prédominante avec des têtes (T) s'élargissant transversalement par rapport à une partie centrale (C) de ladite éprouvette en correspondance d'une dimension de butée desdites têtes (T) ;
- un dispositif de serrage (100) comprenant deux éléments de serrage (1), chaque élément de serrage (1) comprenant un corps (2) configuré pour être raccordé à une partie d'une machine de caractérisation mécanique d'un matériau, ledit corps (2) définissant un logement (5) et comportant un canal de passage (3) délimité par au moins deux parois latérales opposées (4a, 4b) de sorte que ledit canal de passage (3) est ouvert au moins sur un premier côté (L1) dudit corps (2) et sur un deuxième côté (L2) dudit corps (2), transversalement au premier, dans lequel ledit canal de passage (3) est adapté pour recevoir la partie centrale (C) d'une éprouvette (P) et a une dimension transversale plus petite que la dimension de butée de la tête (T) de l'éprouvette (P), dans lequel lesdites parois latérales (4a, 4b) sont élargies à une extrémité du canal de passage (3) pour former des parois de butée (4c) disposées dans des positions fixes par rapport audit canal de passage (3) pour empêcher le passage de ladite tête (T) à travers le canal de passage (3) pendant une caractérisation en traction de l'éprouvette (P) ;
dans lequel les têtes (T) de l'éprouvette (P) possèdent, en partant d'une extrémité de la partie centrale (C) de l'éprouvette (P), une augmentation de la section transversale (largeur), donc divergente, définissant des concavités opposées respectives s'ouvrant dans une extrémité définissant la partie d'extrémité des têtes (T), et dans lequel les parois latérales (4a, 4b) divergent entre elles à une extrémité du canal de passage (3), éloignée de la partie centrale (C) de l'éprouvette (P), de façon à former les parois de butée (4c) disposées dans des positions fixes par rapport au canal de passage (3) qui empêchent le coulissement de la tête de l'éprouvette à travers le canal de passage (3) pendant la caractérisation en traction de l'éprouvette (P) ; au moins une desdites concavités opposées venant se mettre en butée, en cas de désalignement des éléments de serrage (1) pendant l'étape de caractérisation mécanique, sur une paroi de butée (4c) respective ;
**caractérisé en ce que** ledit logement (5) a une forme complémentaire par rapport à ladite tête (T) de l'éprouvette (P) et ladite éprouvette (P) a un axe de symétrie (X-X) le long de la direction d'extension prédominante, ledit logement (5) étant délimité par les parois latérales (4a, 4b) dans lesquelles ledit canal de passage (3) débouche dans le logement (5), ledit logement (5) étant adapté pour recevoir ladite tête (T) en insertion transversale à travers une ouverture (6) du logement (5) disposée sur le premier côté (L1) dudit corps (2), ledit corps (1) comportant une paroi d'extrémité délimitant une partie du logement (5) opposée au canal de passage (3) ; et **en ce que** lesdits éléments de serrage (1), pendant l'étape de caractérisation, peuvent être déplacés dans une direction (F-F) plus proche ou plus éloignée ; ladite tête (T) étant couplée à l'intérieur du logement (5) avec un espace libre pour permettre, lorsque la direction (F-F) ne coïncide pas avec l'axe de symétrie (X-X), des inclinaisons possibles de l'éprouvette (P) pendant les procédures de caractérisation du matériau et favoriser le support d'au moins une des concavités opposées des têtes (T) sur une paroi de butée (4c) respective afin d'éviter des contraintes de flexion sur l'éprouvette (P) dues à un alignement incorrect entre les éléments de serrage (1).

2. Système de caractérisation mécanique d'un matériau selon la revendication 1, dans lequel le corps (2) possède une structure en forme de plaque avec un siège prévu sur une de ses surfaces principales, le siège définissant ledit logement (5).

3. Système de caractérisation mécanique d'un matériau selon la revendication 1 ou 2, dans lequel ladite ouverture (6) comporte au moins un étirement arqué ou possède une conformation rectangulaire ou trapézoïdale.

4. Système de caractérisation mécanique d'un matériau selon l'une quelconque des revendications précédentes, dans lequel ledit logement (5) et ledit canal de passage (3) comportent une paroi de fond (7), opposée à ladite ouverture (6).

5. Système de caractérisation mécanique d'un matériau selon la revendication 4, dans lequel ledit logement (5) comporte une cheville (8) se prolongeant de ladite paroi de fond (7) et adaptée pour être introduite dans une cavité (H) de ladite éprouvette (P), de préférence façonnée en correspondance d'une tête (T).

6. Système de caractérisation mécanique d'un matériau selon une ou plusieurs des revendications précédentes, dans lequel ledit corps (2) est réalisé en matériau à haute ténacité, de préférence en acier.

7. Système de caractérisation mécanique d'un matériau selon la revendication 1, dans lequel ladite éprouvette (P) comporte une cavité (H), de préférence façonnée en correspondance d'une tête (T), ladite cavité (H) étant adaptée pour recevoir une cheville (8) d'un élément de serrage (1) de la machine de caractérisation mécanique d'un matériau.

8. Système de caractérisation mécanique d'un matériau selon la revendication 1, dans lequel ladite éprouvette possède une conformation allongée selon une direction d'extension prédominante avec des têtes (T) élargies transversalement par rapport à une partie centrale (C) de ladite éprouvette (P) en correspondance d'une dimension de butée desdites têtes (T), dans lequel ladite tête (T) possède une conformation arquée, de préférence sphérique, ou trapézoïdale.

9. Système de caractérisation mécanique d'un matériau selon la revendication 1, dans lequel chaque dispositif de serrage (1) comporte une ouverture (6) avec une portion arquée configurée pour permettre un serrage ferme de l'éprouvette à l'intérieur du logement (5) pendant l'exécution des procédures de caractérisation du matériau et une paroi de fond (7) opposée à l'ouverture (6), définissant une surface de butée configurée pour recevoir de manière portante et limiter les problèmes causés par d'éventuelles erreurs de positionnement de l'éprouvette (P).

10. Système de caractérisation mécanique d'un matériau selon la revendication 1, dans lequel chaque élément de serrage (1) définit une retenue de la tête (T) de l'éprouvette (P) dans le logement (5) au moyen d'un verrouillage géométrique.

11. Procédé de serrage d'une éprouvette dans une machine de caractérisation mécanique d'un matériau, comprenant :
disposer un élément de serrage (1) selon une ou plusieurs des revendications 1 à 6 ;
disposer une éprouvette (P) possédant une conformation allongée selon une direction d'extension prédominante avec des têtes (T) élargies transversalement par rapport à une partie centrale (C) de ladite éprouvette (P) en correspondance d'une dimension de butée desdites têtes (T),
insérer ladite partie centrale (C) de ladite éprouvette (P) à l'intérieur du canal de passage (3) le long d'une direction transversale à ladite direction d'extension prédominante de sorte que chaque tête (T) bute contre au moins une desdites parois de butée (4c).
